# EUROPÄISCHE PATENTANMELDUNG

(11) **EP 2 450 098 A1**
(43) Veröffentlichungstag der Anmeldung: **09.05.2012**
(21) Anmeldenummer: 11188063.9
(22) Anmeldetag: 07.11.2011
(51) Int. Cl.: B01F 9/06, B01F 3/18, B01F 13/10, B01F 15/06, B29B 7/10, B29B 7/82

(54) **Verfahren zum Mischen eines aus Feststoffpartikeln bestehenden Mischgutes sowie Mischeranordnung**

(30) Priorität: 08.11.2010 DE 102010060423
(71) Anmelder: Dr. HERFELD GmbH & Co. KG, 58809 Neuenrade (DE)
(72) Erfinder: Herfeld, Matthias Dr., 58636 Iserlohn (DE); Tölle, Ulrich, 32760 Detmold (DE); Rüberg, Wolfgang, 58708 Menden (DE)
(74) Vertreter: Haverkamp, Jens

(57) **Zusammenfassung**

Ein Verfahren zum Mischen eines aus Feststoffpartikeln bestehenden Mischgutes umfasst einen Prozessschritt des Mischens des Mischgutes unter Bedingungen zum Einbringen von Scherkräften in das Mischgut auf einem oberhalb der Umgebungstemperatur liegenden Temperaturniveau in einem ersten Mischer, etwa einen Heizmischer (2), und einen nachfolgenden Prozessschritt des Kühlens des in dem ersten Mischer (2) behandelten Mischgutes in einem Kühlmischer (4).

Eine Mischeranordnung umfasst einen ersten Mischer, etwa einen Heizmischer (2), zum Mischen einer Charge eines aus Feststoffpartikeln bestehenden Mischgutes auf einem oberhalb der Umgebungstemperatur liegenden Temperaturniveau und einen dem ersten Mischer (2) nachgeschalteten Kühlmischer (4) zum Kühlen der im Heizmischer (2) gemischten Mischgutcharge. In Prozessrichtung des ersten Mischers (2) ist ein Vorwärmaggregat, etwa ein Vorwärmmischer (10) und/oder ein beheizter Vorlagebehälter zum Vorerwärmen einer in den ersten Mischer (2) einzubringenden Mischgutcharge vorgeschaltet.

## Beschreibung

Die Erfindung betrifft ein Verfahren zum Mischen eines aus Feststoffpartikeln bestehenden Mischgutes, welches Verfahren einen Prozessschritt des Mischens des Mischgutes unter Bedingungen zum Einbringen von Scherkräften in das Mischgut auf einem oberhalb der Umgebungstemperatur liegenden Temperaturniveau in einem ersten Mischer, etwa einem Heizmischer, und einen nachfolgenden Prozessschritt des Kühlens des in dem ersten Mischer behandelten Mischgutes in einem Kühlmischer umfasst, welches Verfahren batchweise durchgeführt wird, wobei jeweils eine erste Mischgutcharge nach vorherigem Mischen im ersten Mischer im Kühlmischer gekühlt wird, während die nachfolgende Mischgutcharge im ersten Mischer behandelt wird. Ferner betrifft die Erfindung eine Mischeranordnung umfassend einen ersten Mischer, etwa einen Heizmischer, zum Mischen einer Charge eines aus Feststoffpartikeln bestehenden Mischgutes auf einem oberhalb der Umgebungstemperatur liegenden Temperaturniveau und einen dem ersten Mischer nachgeschalteten Kühlmischer zum Kühlen der im Heizmischer gemischten Mischgutcharge.

Eine derartige Mischeranordnung und ein derartiges Verfahren werden beispielsweise für die PVC-Pulvercompound-Herstellung (PVC: Polyvinylchlorid) verwendet. Gegenüber anderen Verfahren der PVC-Pulvercompound-Herstellung, etwa ein Agglomerieren, Granulieren oder Verpasten hat sich das Mischen als das am meisten verbreitete Aufbereitungsverfahren durchgesetzt. Derartige Mischeranordnungen werden aufgrund der Konzeption der daran beteiligten Mischer auch als Heiz-Kühl-Mischer bezeichnet. Bei derartigen Anordnungen ist einem Heizmischer ein Kühlmischer nachgeschaltet. Bei den Heizmischern handelt es sich um hochenergetische Mischer, bei denen durch die Friktionsarbeit der das Mischgut in dem Behälter fördernden Mischwerkzeuge Wärme und kinetische Energie in das Mischgut eingebracht wird. Dieses dient dem Zweck, dass Mischgut auf eine bestimmte Temperatur zu bringen, die naturgemäß oberhalb der Umgebungstemperatur liegt. Ferner wird ein solcher hochenergetischer Mischer verwendet, um Scherkräfte für die vorgesehne Behandlung des Mischgutes in diese einzubringen. Das Ausgangsmischgut besteht aus Feststoffpartikeln. Bei der PVC-Herstellung werden diesen Feststoffpartikeln beim Mischen in dem Heizmischer nach Erreichen einer vorgegebenen Temperatur Zusatzstoffe beigemengt, wie etwa Stabilisatoren und/oder Weichmacher. Damit diese Stoffe von dem Roh-PVC aufgenommen werden, wird die entsprechende Temperatur benötigt, und zwar eine solche, die oberhalb der Polymerisationstemperatur, jedoch unterhalb der Erweichungstemperatur dieser Partikel liegt. Neben den beiden beispielhaft vorgenannten Stoffen werden mitunter auch Farbpigmente dem Mischgut im Heizmischer beigemengt. Dem Heizmischer kommt somit nicht nur die Aufgabe zu, das Mischgut auf die benötigte Temperatur zu erwärmen, sondern auch um eine homogene Mischung des Mischgutes herbeizuführen. Damit das in dem Heizmischer gemischte Material zügig einer weiteren Bearbeitung oder Abfüllung zugeführt werden kann, muss dieses auf eine niedrigere Endtemperatur gekühlt werden. Hierfür dient der in Prozessrichtung dem Heizmischer nachgeschaltete Kühlmischer. Betrieben wird eine solche Heiz-Kühl-Mischeranordnung chargenweise (batchweise), sodass beide Mischer parallel zueinander betrieben werden. Während in dem Heizmischer eine Mischgutcharge gemischt wird, wird parallel hierzu in dem Kühlmischer die zuvor im Heizmischer gemischte Mischgutcharge gekühlt. Typischerweise ist die Zykluszeit durch die notwendige Verweildauer einer Mischgutcharge in dem Heizmischer bestimmt. Der dem Heizmischer nachgeschaltete Kühlmischer ist hinsichtlich seiner Leistungsfähigkeit an die Zykluszeit, die eine Mischgutcharge im Heizmischer verbleiben muss, angepasst, und zwar dergestalt, dass in dieser Zykluszeit die in den Kühlmischer eingebrachte Mischgutcharge in der zur Verfügung stehenden Zeit auf die gewünschte Endtemperatur herabgekühlt wird.

Bei PVC-Herstellern werden zum Bereitstellen der benötigten PVC-Mengen typischerweise mehrere Heiz-Kühl-Mischeranordnungen parallel zueinander betrieben. Die Heiz-Kühl-Mischeranordnungen sind jeweils in Prozesslinien integriert. Zur Steigerung der PVC-Produktion wäre es daher wünschenswert, wenn anstelle des Aufbauens einer neuen Prozesskette die Leistungsfähigkeit einer solchen, ggfs. auch bereits bestehenden Heiz-Kühl-Mischeranordnung gesteigert werden könnte.

Der Erfindung liegt daher die Aufgabe zugrunde ein eingangs genanntes Verfahren sowie eine eingangs genannte Mischeranordnung dergestalt weiterzubilden, dass mit diesen ein höherer Durchsatz bei gleicher Chargengröße möglich ist.

Gelöst wird diese Aufgabe erfindungsgemäß durch ein eingangs genanntes, gattungsgemäßes Verfahren, bei dem vor Einbringen einer Mischgutcharge in den ersten Mischer etwa den Heizmischer diese Mischgutcharge vorerwärmt und erwärmt in den ersten Mischer eingebracht wird.

Die vorrichtungsbezogene Aufgabe wird erfindungsgemäß dadurch gelöst, dass dem ersten Mischer ein Vorwärmmischer, etwa ein Vorwärmmischer und/oder ein beheizter Vorlagebehälter, zum Vorerwärmen einer in den ersten Mischer einzubringenden Mischgutcharge in Prozessrichtung vorgeschaltet ist.

Bei den vorbeschriebenen Lösungen wird eine Mischgutcharge, bevor diese in den hochenergetischen Mischer zum Mischen des Mischgutes auf dem vorgegebenen Temperaturniveau, bei PVC beispielsweise oberhalb seiner Polymerisationstemperatur, eingebracht wird, vorerwärmt. Gemäß diesen Lösungen bestehen unterschiedliche Möglichkeiten das Verfahren bzw. die Mischeranordnung zu konzipieren. In einem Fall ist quasi eine funktionale Trennung zwischen den Funktionalitäten "Heizen" und "hochenergetisches Mischen" vorgesehen. Bei dieser Ausgestaltung wird das Mischgut in einem Vorwärmaggregat, beispielsweise in dem Vorwärmmischer auf diejenige Temperatur gebracht, bei der der gewünschte Energieeintrag durch hochenergetisches Mischen erfolgen soll. Sodann kommt dem dem Vorwärmaggregat nachgeschalteten ersten Mischer ― dem hochenergetisch arbeitenden Mischer ― die Aufgabe zu, die benötigten Scherkräfte in das Mischgut einzubringen und dieses zumindest auf dem Temperaturniveau zu belassen, welches Temperaturniveau die von diesem Mischer empfangene Mischgutcharge aufweist. Selbst ein Vorwärmen der Mischgutcharge in dem Vorwärmaggregat auf eine Temperatur oberhalb der in dem hochenergetischen Mischer benötigten Temperatur ist denkbar. Hierdurch können Temparaturabfälle bei der Übergabe der vorgewärmten Mischgutcharge von dem Vorwärmmischer auf den dem Vorwärmmischer nachgeschalteten hochenergetischen Mischer kompensiert werden. Gemäß anderen Ausgestaltungen der Erfindung ist vorgesehen, dass das Vorerwärmen des Mischgutes typischerweise auf ein Temperaturniveau von etwa 50 ― 75 % derjenigen Temperatur erfolgt, auf die eine Mischgutcharge in dem nachgeschalteten Hochenergiemischer erwärmt werden wird. Zufriedenstellende Ergebnisse werden allerdings auch erreicht, wenn eine Vorerwärmung auf 20 ― 50 % der Soll-Temperatur des nachgeschalteten Mischers erfolgt. Bei dieser Ausgestaltung kommt dem hochenergetischen Mischer ebenfalls eine Heizfunktion zu, weshalb dieser auch als Heizmischer angesprochen werden kann und in den folgenden Ausführungen unabhängig davon, ob ein wesentlicher Temperatureintrag durch diesen Mischer erfolgt oder nicht, als solcher angesprochen wird. Ausgenutzt wird bei den vorgeschlagenen Lösungen die chargenweise Verarbeitung des Mischgutes. Somit wird zumindest ein Teil der im Heizmischer im Stand der Technik durchgeführten Arbeit zum Erwärmen des Mischgutes auf die notwendige Temperatur bereits vorgeschaltet durchgeführt, und zwar durch Vorerwärmen des Mischgutes in einem Vorwärmaggregat. Mithin braucht zum Erzielen ein und desselben Mischergebnisses eine Mischgutcharge weniger lange im Heizmischer belassen zu werden. Ausgenutzt wird bei den vorgeschlagenen Lösungen auch, dass für das vorgesehene Mischen das Mischgut eine bestimmte Mindesttemperatur aufweisen muss, damit der Mischprozess bestimmungsgemäß abläuft. Bei einer Vorerwärmung auf 50 ― 75 % der Soll-Temperatur im Heizmischer lassen sich die Zykluszeiten um mehr als 20 ― 25 % reduzieren. Aber auch eine Verringerung der Zykluszeit um 10 ― 20 % stellt bereits eine nicht unerhebliche Verbesserung dar.

Als Vorwärmaggregat eignen sich Vorwärmmischer, beheizte Vorlagebehälter oder Wärmetauscher, durch den die zu erwärmenden Feststoffpartikel durchgeführt werden. Bei Einsatz eines solchen Wärmetauschers ist diesem typischerweise ein Pufferspeicherbehältnis nachgeschaltet, in dem das vorerwärmte Mischgut akkumuliert, bis dieses als Charge in den nachgeschalteten Heizmischer eingebracht wird. In Anhängigkeit davon, auf welche Temperatur eine Mischgutcharge vorerwärmt werden soll, wird man einen Vorwärmmischer oder einen beheizten Vorlagebehälter einsetzen, wobei Vorwärmmischer eher geeignet sind, eine Mischgutcharge auf höhere Temperaturen vorzuerwärmen als mit einem beheizten Vorlagebehälter. Auch eine Kombination dieser beiden Vorwärmaggregate ist möglich, wobei bei einer solchen Ausgestaltung der beheizte Vorlagebehälter in Prozessrichtung dem Vorwärmmischer vorgeschaltet ist.

Wird ein Vorwärmmischer eingesetzt, ist dieser vorzugsweise ein Temperiermischer, also ein Mischer, wie dieser auch als Kühlmischer bekannt ist und eingesetzt wird. Im Unterschied zu dem Betrieb eines solchen Temperiermischers als Kühlmischer wird der Vorwärmmischer mit einem Heizfluid (flüssig oder gasförmig) beaufschlagt.

Gemäß einer bevorzugten Ausgestaltung wird die für die Vorerwärmung bzw. den Betrieb eines solchen Vorwärmmischers benötigte Wärmeenergie aus der im Zuge des Kühlens einer Mischgutcharge im Kühlmischer abgeführten Wärme gewonnen. Zu diesem Zweck ist zumindest eine Rücklaufleitung, vorzugsweise sind alle Rücklaufleitungen des Kühlmischers an eine Wärmepumpe zum Entnehmen von darin mitgeführter Wärme angeschlossen. Der zweite Kreis der Wärmepumpe ist eingeschaltet in den Vorwärmkreis zum Zuführen von Wärme an den Vorwärmmischer. Auf diese Weise wird die durch den Vorwärmmischer und/ oder den nachgeschalteten Mischer in das Mischgut eingebrachte Wärme genutzt, um eine nachfolgende Mischgutcharge vorzuerwärmen. In Folge dieser Energierückgewinnung ist der zusätzliche Energieaufwand zum Betreiben eines solchen Vorwärmmischers, zumindest was die Bereitstellung der benötigten Wärme betrifft, nochmals reduziert. Begünstigt wird eine solche Wärmerückgewinnung, dass heißt: Der Abzug von Wärme aus der Abwärme des Kühlmischers dadurch, dass der Kühlmischer aus Sicherheitsgründen zur Aufnahme von zwei Heizmischerchargen konzipiert ist. Daher steht in dem Kühlmischer eine entsprechend große Kühloberfläche zur Verfügung mit der Folge, dass es eine Temperaturdifferenz zwischen dem Kühlfluid im Zulauf und im Rücklauf gibt und diese Temperaturdifferenz jedoch innerhalb eines Zyklusses relativ konstant bleibt. Dies gewährleistet sodann eine über eine Zykluszeit relativ konstante Wärmezufuhr an den Vorwärmmischer, ohne dass zusätzliche Wärmequellen benötigt werden.

Von besonderem Vorteil des beschriebenen Verfahrens sowie der beschriebenen Mischeranordnung ist auch, dass das Erwärmen einer Mischgutcharge im Vorwärmmischer energetisch günstiger vorgenommen werden kann als im Heizmischer, bei dem der Temperatureintrag ausschließlich friktionsbedingt erfolgt. Somit ist ein solches Verfahrens und eine solche Mischeranordnung zudem energieeffizienter.

Da eine solche Mischeranordnung typischerweise in eine Prozesslinie bzw. Prozesskette eingeschaltet ist oder ein einer Umgebung angeordnet ist, in der auch andere Aggregate gekühlt werden, bzw. Extruder oder dergleichen, ist in einer Weiterbildung vorgesehen, dass auch die Abwärme von weiteren Aggregaten genutzt wird, um den Vorwärmmischer die gewünschte Wärme zuzuführen. Ist in einer solchen Produktionsanlage eine zentrale Kühlung vorgesehen, kann die von dieser produzierten Abwärme über einen Wärmetauscher oder eine Wärmepumpe für die Zwecke der Vorerwärmung bei dem beschriebenen Verfahren genutzt werden.

Der typischerweise als Temperiermischer konzipierte Vorwärmmischer, der zum Einbringen der Wärme in das Mischgut an einen Vorwärmkreis angeschlossen ist, kann auch über zusätzliche, im Mischbehälter befindliche Werkzeuge verfügen. Diese können niedrigenergetisch oder auch mit einem gewissen Energieeintrag arbeiten, wenn es für das zu mischende Material zweckmäßig ist, einen ersten Aufschluss des Mischgutes bereits im Vorwärmmischer zu erzeugen oder bereits in diesem Mischstadium Scherkräfte in das Mischgut einzubringen.

Weitere Vorteile und Ausgestaltungen ergeben sich aus der nachfolgenden Beschreibung von Ausführungsbeispielen unter Bezugnahme auf die beigefügten Figuren. Es zeigen:
- **Fig. 1:**: Eine schematisierte Darstellung nach Art eines Blockschaltbildes einer Heiz-Kühl-Mischeranordnung,
- **Fig. 2:**: Eine schematisierte Querschnittsdarstellung des Mischbehälters des Kühlmischers der vorangegangen Figuren,
- **Fig. 3:**: Eine schematisierte Querschnittsdarstellung eines weiteren Mischbehälters eines Kühlmischers,
- **Fig. 4:**: Der zylindrische Teil eines Mischbehälters eines Kühlmischers gemäß einer weiteren Ausgestaltung in einer perspektivischen Ansicht,
- **Fig. 5:**: Der Mischbehälter der Figur 4 in einer Stirnseitenansicht,
- **Fig. 6:**: In einer perspektivischen Darstellung einen als Hohlleiste konzipierten Kühlmittelkanal,
- **Fig. 7:**: Die Durchführung eines Anschlusses einer Hohlleiste durch die Behälterwand des Mischbehälters der Figuren 4 bzw. 5,
- **Fig. 8:**: Der zylindrische Teil eines weiteren Mischbehälters eines Kühlmischers gemäß noch einer weiteren Ausgestaltung in einer perspektivischen Ansicht und
- **Fig. 9:**: Der Mischbehälter der Figur 8 in einer Stirnseitenansicht.

Eine Heiz-Kühl-Mischeranordnung 1 umfasst einen Heizmischer 2. Der Heizmischer 2 des gezeigten Ausführungsbeispiels dient zum Mischen eines Mischgutes mit Temperatureintrag, und zwar durch Friktion zwischen den dem Heizmischer 2 zugeordneten Mischwerkzeugen und dem darin enthaltenen Mischgut. Die Mischwerkzeuge des Heizmischers 2 sind durch einen Elektromotor 3 angetrieben. In Richtung der Prozesskette dem Heizmischer 2 nachgeschaltet, ist ein Kühlmischer 4 vorgesehen. Der Kühlmischer 4 nimmt nach Beendigung eines Heizmischzyklus das gemischte und noch warme Mischgut auf und kühlt dieses. Das Kühlen des in den Kühlmischer 4 eingebrachten Mischgutes erfolgt durch den Kontakt desselben an gekühlten Elementen des Kühlmischers, beispielsweise seiner Innenwand und/oder entsprechenden Einbauten. Zum Abführen der Wärme ist der Kühlmischer 4 an einen Kühlkreis 5 angeschlossen. Über einen Zulauf 6 wird dem Kühlmischer 4 das Kühlmedium (vorzugsweise Wasser) zugeführt. Über einen Rücklauf 7 wird das erwärmte Kühlmittel von dem Kühlmischer 4 weggeführt, damit dieses anschließend gekühlt über den Zulauf 6 wieder in den Kühlmischer 4 eingebracht wird. Zum Kühlen des durch den Rücklauf 7 strömenden Kühlmittels wird eine Wärmepumpe 8 verwendet. Somit ist der Kühlkreis 5 an den ersten Kreis der Wärmepumpe 8 angeschlossen. Die Wärmepumpe 8 entzieht die in dem Rücklauf 7 transportierte Wärme, damit das anschließend um die entnommene Wärme abgekühlte Kühlmittel über den Zulauf 6 wieder dem Kühlmischer 4 zugeführt werden kann. Der zweite Kreis der Wärmepumpe 8 ist in den Vorwärmkreis 9 eines Vorwärmmischers 10 eingeschaltet. Bei dem Vorwärmmischer 10 handelt es sich, wie auch bei dem Kühlmischer 4, um einen Temperiermischer. Der Vorwärmmischer 10 dient zum Vorerwärmen einer Mischgutcharge, bevor diese in den Heizmischer 2 eingebracht wird. Daher ist in der Prozesskette der Vorwärmmischer 10 dem Heizmischer 2 vorgeschaltet. Der Vorwärmkreis 9 umfasst einen Zulauf 11 und einen Rücklauf 12. Über den Zulauf 11 wird der Vorwärmmischer 10 mit einem entsprechend temperierten Aufwärmmedium (insbesondere Wasser) beaufschlagt. Da das Mischgut auf Umgebungstemperatur befindlich in den Vorwärmmischer 10 eingebracht wird, die Temperatur des Temperiermediums höher ist als die Umgebungstemperatur, wird innerhalb des Vorwärmmischers 10 die zugeführte Wärme an das darin enthaltene Mischgut abgegeben, welches sich demzufolge erwärmt. Das um die in dem Vorwärmmischer 10 abgegebene Wärme abgekühlte Temperiermittel wird über den Rücklauf 12 der Wärmepumpe 8 zugeführt, damit dieses durch diese wieder erwärmt und sodann erneut dem Vorwärmmischer 10 zugeführt werden kann.

Der Vorwärmmischer 10 weist eine Größe auf, dass dieser zur Aufnahme einer Mischgutcharge ausreicht. Im Unterschied zu dem Vorwärmmischer 10 ist der Kühlmischer 4 mit einem größeren Fassungsvolumen ausgestattet. Der Kühlmischer 4 ist konzipiert, um aus Sicherheitsgründen zwei Mischgutchargen des Heizmischers 2 aufnehmen zu können.

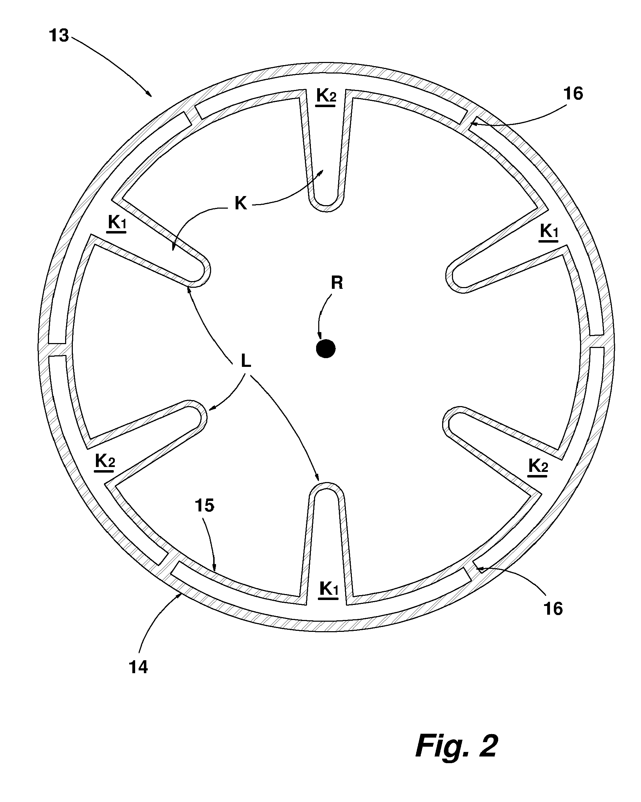

Als Kühlmischer und Vorwärmmischer - Temperiermischer - können grundsätzlich Temperiermischer zum Einsatz gelangen. Beispielsweise können Temperiermischer eingesetzt werden, die keine drehenden Werkzeuge aufweisen. Figur 2 zeigt anhand eines Ausführungsbeispiels schematisiert einen Querschnitt durch den Mischbehälter 13 eines solchen Temperiermischers.

Der Mischbehälter 13 des ersten Ausführungsbeispiels ist doppelwandig konzipiert. Die äußere Wand ist mit dem Bezugszeichen 14 und die Innenwand mit dem Bezugszeichen 15 gekennzeichnet. Der zwischen der äußeren Wand 14 und der Innenwand 15 befindliche Hohlraum ist durch mehrere Schotte 16 in einzelne Temperiermittelkanäle K unterteilt. Bei dem in Figur 2 gezeigten Ausführungsbeispiel sind insgesamt drei Kreisläufe vorgesehen, wobei jeder Kreislauf über einen Hinkanal K₁ und einen Rückkanal K₂ verfügt, die im Bereich der Stirnseite 20 miteinander verbunden sind.

Die Innenwand 15 ist durch in radialer Richtung nach innen vorspringende Hohlleisten L strukturiert. Die Hohlleisten L sind Teil jeweils einer Temperiermittelkammer K. Durch diese Maßnahme wird nicht nur die innere Oberfläche der Innenwand 15 und damit die zur Temperierung zur Verfügung gestellte Fläche vergrößert, sondern die Hohlleisten L unterstützen bei einer Rotation des Mischbehälters 2 den Umwälzprozess des in diesen eingebrachten Mischgutes.

Es versteht sich, dass die Konzeption des Mischbehälters 2, wie in Figur 2 gezeigt, nur eine von zahlreichen Möglichkeiten ist, die innere Mantelfläche eines Mischbehälters zu strukturieren. Beispielsweise können anstelle der in dem Ausführungsbeispiel gezeigten Hohlleisten L auch zahlreiche kleinere Wellenstrukturen vorgesehen sein.

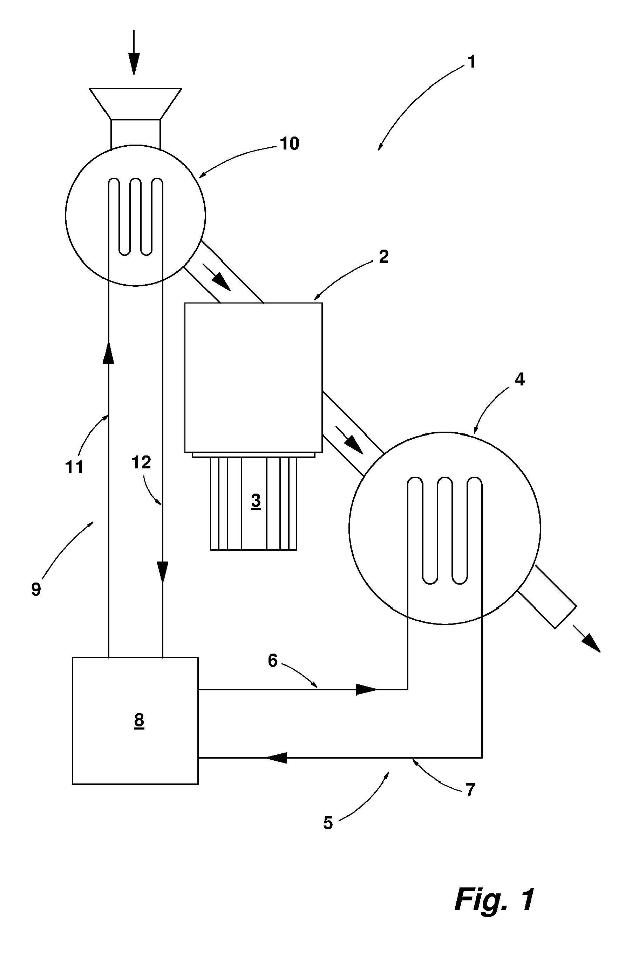

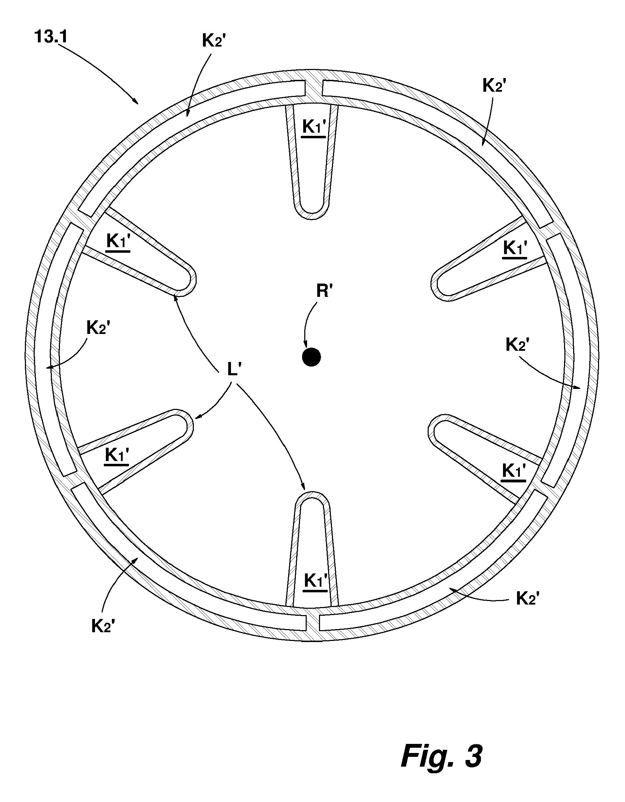

Figur 3 zeigt eine von mehreren weiteren Möglichkeiten, die Temperiermittelkanäle in dem Mischbehälter eines Temperiermischers auszubilden. Prinzipiell ist der Mischbehälter 13.1 des Ausführungsbeispiels der Figur 3 ebenso aufgebaut wie der Mischbehälter 13 der Figur 2. Der Mischbehälter 13.1 unterscheidet sich lediglich hinsichtlich der Führung seiner Temperiermittelkanäle von dem Mischbehälter 13. Bei dem Mischbehälter 13.1 sind die als Hohlleisten L' ausgebildeten Temperiermittelkanäle K₁' die Hinkanäle, wobei diese auf die Hohlleisten L' beschränkt sind. Die Rückkanäle K₂' sind in den zwischen den beiden Wänden befindlichen Hohlraum angeordnet und ebenso wie bei dem Ausführungsbeispiel der Figuren 1 bis 2 durch Schotte voneinander getrennt.

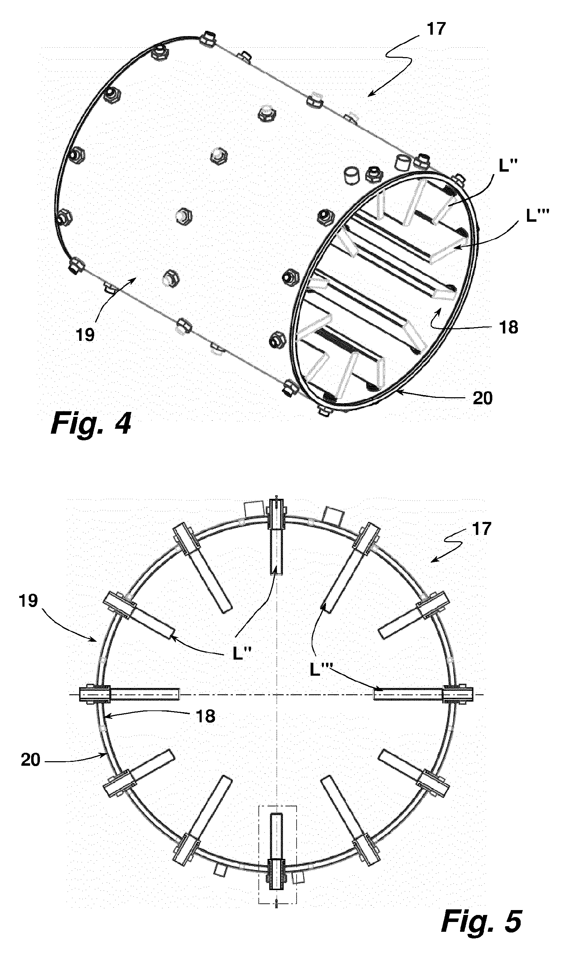

Figuren 4 bis 7 zeigen in einem weiteren Ausführungsbeispiel einen Mischbehälter für einen Temperiermischer. Der Mischbehälter 17 ist, um eine Einsicht in denselben zu gestatten, ohne die endseitigen Kopfteile gezeigt. Der Mischbehälter 17 verfügt ebenso wie der Mischbehälter der vorangegangenen Figuren über von der Innenwand 18 abragende Hohlleisten L" und L"', die ebenso wie die Hohlleisten L, L' der vorbeschriebenen Ausführungsbeispiele mit Temperierflüssigkeit, beispielsweise Kühlflüssigkeit durchströmt sind. Im Unterschied zu der Ausgestaltung der Mischbehälter 13, 13.1 der vorbeschriebenen Ausführungsbeispiele handelt es sich bei den Hohlleisten L" und L"' um solche, die mit ihren Anschlüssen den doppelwandig konzipierten Mischbehälter 19 durchgreifen. Somit liegen bei dem dargestellten Ausführungsbeispiel die Anschlüsse zum Anschließen der flüssigkeitsführenden Leitungen an der äußeren Mantelfläche des Mischbehälters 17. Dabei ist vorgesehen, dass die die Behälterwand durchgreifenden Anschlüsse der einzelnen Hohlleisten L", L"' nicht in unmittelbarer Flüssigkeitsverbindung mit der Flüssigkeitswegsamkeit zwischen der Behälterinnenwand 18 und der Behälteraußenwand 20 stehen.

Jede Hohlleiste L", L'" ist bei dem dargestellten Ausführungsbeispiel im Bereich ihres Zu- und Ablaufes sowie in einem mittleren Bereich an der Mischbehälterwand in der vorbeschriebenen Art und Weise befestigt. Dabei dient die zwischen den beiden Endbefestigungen befindliche mittlere Befestigung lediglich zum Halten einer Hohlleiste L" bzw. L"', während die beiden Endanschlüsse zusätzlich zum Anschließen an den Kühlflüssigkeitskreislauf vorgesehen sind.

Aus der Seitenansicht der Figur 5 wird deutlich, dass die Hohlleisten L", L"' eine unterschiedliche Höhe bei dem dargestellten Ausführungsbeispiel in Bezug auf die Innenwand 18 des Mischbehälters 17 aufweisen.

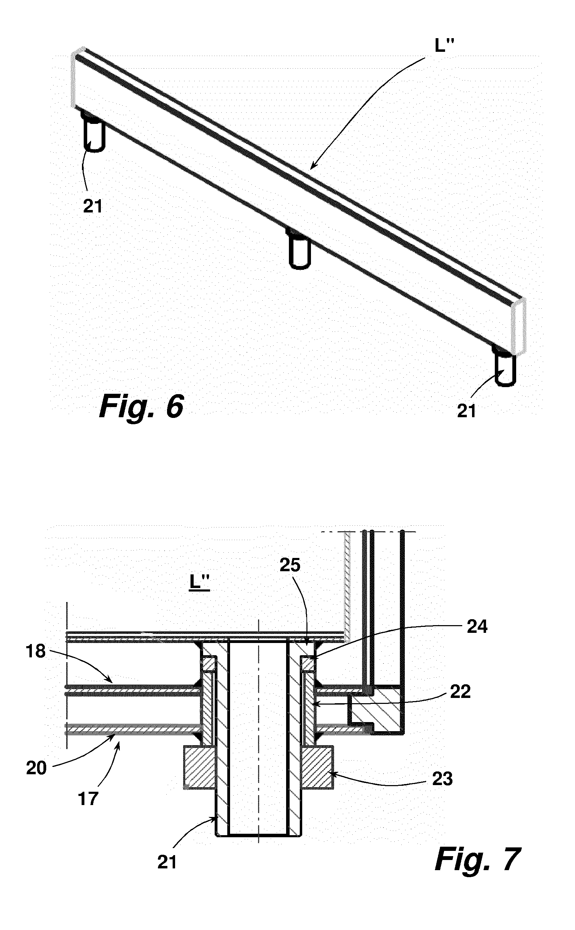

Figur 6 zeigt in einer perspektivischen Ansicht eine Hohlleiste L". Die Hohlleiste L" ist im Querschnitt rechteckförmig konzipiert und erstreckt sich im Wesentlichen über die gesamte Länge des in Figur 4 gezeigten Mischbehälterteils 19.

In der Schnittdarstellung der Figur 7 ist der Durchgriff eines Flüssigkeitsanschlusses einer Hohlleiste L" dargestellt. Die aus der Innenwand 18 und der Außenwand 20 aufgebaute doppelwandige Behälterwand, die zwischen den beiden Wänden 18, 20 ebenfalls flüssigkeitsdurchströmt ist, verfügt zum Einsetzen eines Anschlussstutzens 21 der Hohlleiste L" über einen durch ein Rohrstück 22 gebildeten Durchlass durch die Behälterwand. Das Rohrstück 22 ist, wie in Figur 7 gezeigt, flüssigkeitsdicht in die doppelwandige Mischbehälterwand eingesetzt. Der Anschlussstutzen 21 durchgreift das Rohrstück 22 und ist an diesem mittels einer Mutter 23 festgesetzt. Ein Distanzstück 24 befindet sich zwischen dem Fuß 25 des Anschlussstutzens 21 und dem Rohrstück 22. Auf das aus dem Behälter herausragende Ende des Anschlusses 21 ist eine in der Figur nicht dargestellte Verbindungsleitung aufgesetzt, um den Anschlussstutzen 21 mit dem Anschlussstutzen einer benachbart angeordneten Hohlleiste L"' oder L" zu verbinden. Die Hohlleisten L", L'" sind in Gruppen zusammengeschlossen, wie dieses in Bezug auf die Temperiermittelkanäle der Figuren 4 und 5 beschrieben ist.

Die in den Figuren 4 bis 7 beschriebene Konzeption des Anordnens von Hohlleisten innerhalb des Mischbehälters 17 erlaubt eine sehr flexible Auslegung der Mischbehälter. In Abhängigkeit von der jeweils gewünschten Anforderung werden mehr oder weniger Hohlleisten verbaut. Dieses ist abhängig von dem zu temperierenden Material, der vorgesehenen Verweildauer desselben innerhalb des Mischbehälters und der Größe desselben. Zudem ist eine Herstellung eines Mischbehälters mit Hohlleisten, wie zu dem Ausführungsbeispiel der Figuren 4 bis 7 beschrieben, einfacher als die Herstellung der Kanäle in dem Ausführungsbeispiel der Figuren 2 oder 3. Auch besteht die Möglichkeit, durch Austauschen einzelner Hohlleisten innerhalb eines solchen Behälters, wie zu dem Ausführungsbeispiel 4 bis 7 beschrieben, einen solchen an unterschiedliche Gegebenheiten anzupassen. So kann beispielsweise durch Einbau größerer Hohlleisten, mithin von Hohlleisten mit einer größeren Temperieroberfläche, die Leistungsfähigkeit des Mischers erhöht werden. Bei der Konzeption eines Temperiermischers, wie zu den Figuren 4 bis 7 beschrieben, besteht zudem die Möglichkeit, dass Hohlleisten zur Vergrößerung der Temperierfläche aufeinander montiert werden und mithin eine erste, an der Behälterwand befestigte Hohlleiste auf ihrer von der Behälterwand wegweisenden schmalen Seite eine weitere Hohlleiste trägt. Diese steht in Flüssigkeitsverbindung mit der ersten, an der Behälterwand angeordneten Hohlleiste. Die in dem Ausführungsbeispiel der Figuren 4 bis 7 beschriebene Konzeption, bei der die eingesetzten Hohlleisten die Mischbehälterwand durchgreifen und mittels Muttern festgelegt sind, gestattet auch einen Austausch derselben, wenn der Mischbehälter für die Zwecke des Mischen eines anderen Mischgutes umgerüstet werden soll.

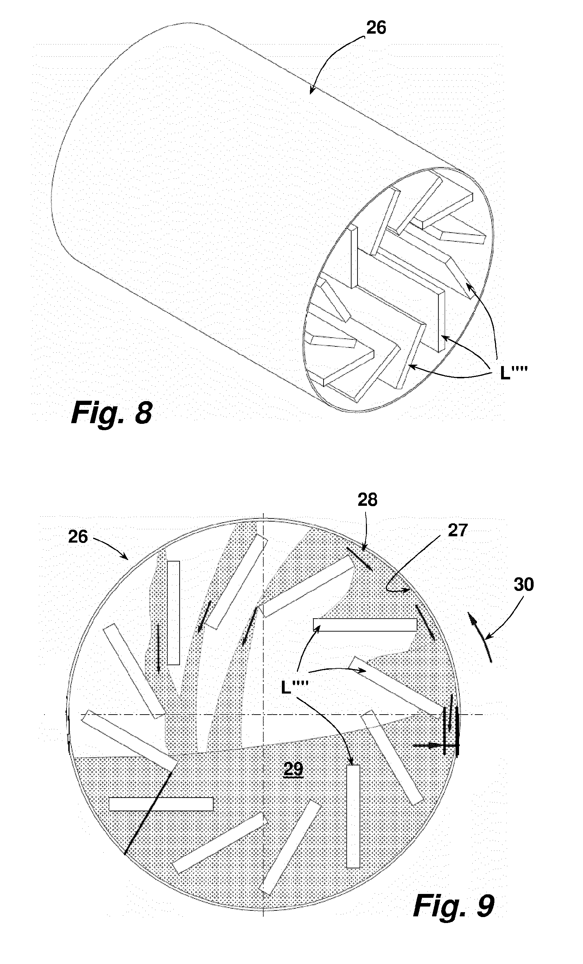

Figur 8 zeigt einen weiteren Mischbehälter 26 für einen Temperiermischer. Dieser ist prinzipiell konzipiert wie der Mischbehälter 17. Im Unterschied zu dem Mischbehälter 17 sind die Hohlleisten L"" gegenüber der Anordnung der Hohlleisten L", L'" des zuvor beschriebenen Ausführungsbeispiels gegenüber der Innenwand 27 des Mischbehälters 26 geneigt. Der Einfachheit halber sind die Anschlussstutzen der Hohlleisten L"", in den Figuren 8 und 9 nicht gezeigt.

Die Hohlleisten L"" des Mischbehälters 26 sind mit Abstand zur Innenwand 27 des doppelwandig konzipierten Mischbehälters 26 angeordnet. Somit befindet sich zwischen der Innenwand 27 des Behälters 26 und den Hohlleisten L"" ein Spalt 28, durch den, wie in Figur 9 dargestellt, Mischgut 29 hindurch treten kann. Wenn gewünscht, kann die Neigung der Hohlleisten L"" und/oder deren Abstand von der Innenwand 27 eingestellt werden. Durch die in Drehrichtung 30 weisende geneigte Anordnung der Hohlleisten L"" ist eine Materialmitnahme über einen größeren Winkelbetrag möglich. In Figur 9 sind mit den in dem Mischgut 29 eingetragenen Pfeilen die Bewegungsrichtung von Mischgut 29 bei einem Drehen des Mischbehälters 26 in der durch den Pfeil 30 gekennzeichneten Drehrichtung ersichtlich.

In Abhängigkeit von der jeweils vorgesehenen oder eingestellten Spaltbreite zwischen den Hohlleisten L"" und der Innenwand 27 des Mischbehälters 26 ist die Förderleistung der Hohlleisten L "" einstellbar. Als weitere Variable zur Bestimmung der Förderleistung kann die Drehzahl dienen, mit der der Mischbehälter 26 rotatorisch angetrieben wird.

Durch den Spalt zwischen den Hohlleisten L"" und der Innenwand 27 erfolgt eine Materialbewegung entgegen der Drehrichtung 30 des Mischbehälters 26 über einen relativ großen Drehwinkelbetrag, so dass die Temperierleistung eines solchermaßen konzipierten Mischbehälters 26 besonders effektiv ist.

Die Erfindung ist anhand von Ausführungsbeispielen beschrieben worden. Ohne den Umfang der Ansprüche zu verlassen, ergeben sich für einen Fachmann zahlreiche weitere Ausgestaltungen, die ebenfalls zum Offenbarungsgehalt dieser Ausführungen gelten, ohne dass diese jedoch ausdrücklich erläutert werden müssten.

### Bezugszeichenliste

- 1: Heizkühlmischeranordnung
- 2: Heizmischer
- 3: Elektromotor
- 4: Kühlmischer
- 5: Kühlkreis
- 6: Zulauf
- 7: Rücklauf
- 8: Wärmepumpe
- 9: Vorwärmkreis
- 10: Vorwärmmischer
- 11: Zulauf
- 12: Rücklauf
- 13, 13.1: Mischbehälter
- 14: äußere Wand
- 15: Innenwand
- 16: Schott
- 17: Mischbehälter
- 18: Innenwand
- 19: Mischbehälter
- 20: Außenwand
- 21: Anschlussstutzen
- 22: Rohrstück
- 23: Mutter
- 24: Distanzstück
- 25: Fuß
- 26: Mischbehälter
- 27: Innenwand
- 28: Spalt
- 29: Mischgut
- 30: Drehrichtung

- K: Temperiermittelkanal
- K₁, K₁': Hinkanal
- K₂, K₂': Rückkanal
- L, L', L", L"', L"": Hohlleiste
- R, R': Rotationsachse

## Patentansprüche

1. Verfahren zum Mischen eines aus Feststoffpartikeln bestehenden Mischgutes, welches Verfahren einen Prozessschritt des Mischens des Mischgutes unter Bedingungen zum Einbringen von Scherkräften in das Mischgut auf einem oberhalb der Umgebungstemperatur liegenden Temperaturniveau in einem ersten Mischer, etwa einem Heizmischer (2), und einen nachfolgenden Prozessschritt des Kühlens des in dem ersten Mischer (2) behandelten Mischgutes in einem Kühlmischer (4) umfasst, welches Verfahren batchweise durchgeführt wird, wobei jeweils eine erste Mischgutcharge nach vorherigem Mischen im ersten Mischer (2) im Kühlmischer (4) gekühlt wird, während die nachfolgende Mischgutcharge im ersten Mischer (2) behandelt wird, **dadurch gekennzeichnet, dass** vor Einbringen einer Mischgutcharge in den ersten Mischer (2) diese Mischgutcharge vorerwärmt und erwärmt in den ersten Mischer (2) eingebracht wird.

2. Verfahren nach Anspruch 1, **dadurch gekennzeichnet, dass** die für die Vorerwärmung benötigte Wärmeenergie aus der im Zuge des Kühlens einer Mischgutcharge im Kühlmischer (4) entnommenen Wärme gewonnen wird.

3. Verfahren nach Anspruch 2 oder 3, **dadurch gekennzeichnet, dass** die für die Vorerwärmung benötigte Wärmeenergie aus der im Zuge des Kühlens von weiteren in der Prozesslinie angeordneter Aggregate geführte Wärme gewonnen wird.

4. Verfahren nach Anspruch 2, **dadurch gekennzeichnet, dass** die Wärmerückgewinnung mittels einer Wärmepumpe (8) erfolgt.

5. Mischeranordnung umfassend einen ersten Mischer, etwa einen Heizmischer (2) zum Mischen einer Charge eines aus Feststoffpartikeln bestehenden Mischgutes auf einem oberhalb der Umgebungstemperatur liegenden Temperaturniveau und einen dem ersten Mischer (2) nachgeschalteten Kühlmischer (4) zum Kühlen der im ersten Mischer (2) behandelten Mischgutcharge, **dadurch gekennzeichnet, dass** dem ersten Mischer (2) ein Vorwärmaggregat, etwa ein Vorwärmmischer (10) und/oder ein beheizter Vorlagebehälter, zum Vorerwärmen einer in den ersten Mischer (2) einzubringenden Mischgutcharge in Prozessrichtung vorgeschaltet ist.

6. Mischeranordnung nach Anspruch 5, **dadurch gekennzeichnet, dass** zumindest eine Rücklaufleitung (7) des Kühlkreises (5) des Kühlmischers (4) an eine Wärmepumpe (8) zum Entnehmen von darin mitgeführter Wärme angeschlossen ist, welche Wärmepumpe (8) mit ihrem zweiten Kreis in den Vorwärmkreis (9) zum Zuführen von Wärme an das Vorwärmaggregat (10) eingeschaltet ist.

7. Mischeranordnung nach Anspruch 6, **dadurch gekennzeichnet, dass** an die Wärmepumpe die Rückläufe weiterer Kühlkreise von der Prozesslinie zugeordneter Aggregate zur Wärmeübertragung auf den an den zweiten Kreis der Wärmepumpe angeschlossenen Vorwärmkreis angeschlossen sind.

8. Mischeranordnung nach einem der Ansprüche 5 bis 7, **dadurch gekennzeichnet, dass** es sich bei dem Vorwärmmischer (10) und/oder dem Kühlmischer (4) jeweils um einen Temperiermischer handelt, der einen Behälter (13, 13.1, 19, 26) zur Aufnahme des Mischgutes (29) mit zumindest einen mit seiner Oberfläche zumindest teilweise in Kontakt mit den zu temperierenden Feststoffpartikeln gelangenden Temperiermittelkanal (K₁, K₁', K₂, K₂'; L, L', L", L"', L"") aufweist, durch den bei einem Betrieb des Mischers (4, 10) Temperiermittel gefördert wird, wobei der Behälter (13, 13.1, 19, 26) um eine seine beiden Stirnseiten durchstoßende Achse, insbesondere um seine Längsachse, drehbar gelagert ist und als Umwälzeinrichtung ein motorischer Antrieb zum Drehen des Behälters (13, 13.1, 19, 26) vorgesehen ist.

9. Mischeranordnung nach Anspruch 8, **dadurch gekennzeichnet, dass** der Behälter (13, 13.1, 19, 26) um eine quer zu seiner Drehachse verlaufende Schwenkachse zum Verstellen des Behälters (13, 19, 26) aus einer Befüllungsstellung und/oder aus einer Entleerungsstellung in seine Mischstellung und umgekehrt schwenkbar gelagert ist.

10. Mischeranordnung nach Anspruch 8 oder 9, **dadurch gekennzeichnet, dass** der Behälter (13, 13.1, 19, 26) doppelwandig konzipiert ist und umfänglich verteilt mehrere, insbesondere parallel zu seiner Drehachse (R, R') verlaufende Temperiermittelkanäle (K, K₁, K₂, K₁', K₂'; L, L', L", L"', L"") aufweist.

11. Mischeranordnung nach Anspruch 10, **dadurch gekennzeichnet, dass** der Behälter (26) zur Vergrößerung seiner inneren Oberfläche in radialer Richtung nach innen vorspringende, als Hohlleisten (L, L', L", L"', L"") ausgeführte Strukturen aufweist.

12. Mischeranordnung nach Anspruch 11, **dadurch gekennzeichnet, dass** die nach innen vorspringenden Strukturen als Temperiermittelkanäle ausgeführt sind.

13. Mischeranordnung nach einem der Ansprüche 10 bis 12, **dadurch gekennzeichnet, dass** die gesamte Innenwand (15) des Mischbehälters (13, 26) Teil eines oder mehrerer Temperiermittelkanäle (K, K₁, K₂; K₁', K₂') ist.

14. Mischeranordnung nach Anspruch 10, **dadurch gekennzeichnet, dass** die Hohlleisten (L", L"', L"") mit ihren Anschlussstutzen (21) die Innenwand (15) sowie die Außenwand (20) des Mischbehälters (19) durchgreifen und eine direkte Flüssigkeitswegsamkeit zwischen der Innenwand (15) und der Außenwand (20) und derjenigen des Anschlussstutzens (21) unterbunden ist.

15. Mischeranordnung nach Anspruch 10, **dadurch gekennzeichnet, dass** die Hohlleisten (L"") gegenüber einer Lotrechten zur Innenwand (27) des Mischbehälters (26), insbesondere in Drehrichtung (30) des Mischbehälters (26) geneigt sind.

16. Mischeranordnung nach Anspruch 15, **dadurch gekennzeichnet, dass** die Hohlleisten (L"") von der Innenwand (26) des Mischbehälters (26) beabstandet sind.
